# EUROPEAN PATENT APPLICATION

(11) **EP 4 803 745 A1**
(43) Date of publication of application: **09.09.2026**
(21) Application number: 26160209.8
(22) Date of filing: 23.02.2026
(51) Int. Cl.: F03H 1/00

(54) **ELECTRIC THRUSTER WITH HEXABORIDE EMITTER**

(30) Priority: 05.03.2025 US 202563767164 P; 04.09.2025 US 202519318682
(71) Applicant: Aerojet Rocketdyne, Inc., Melbourne, FL 32901 (US)
(72) Inventor: LANGAN, Timothy, Melbourne, 32919 (US); SANDERS, Paul, Melbourne, 32919 (US); BRYLINSKI, Sophia G., Melbourne, 32919 (US)
(74) Representative: Dehns

(57) **Abstract**

A system according to an example of the present invention includes an electric thruster configured to generate thrust. The electric thruster includes an electron emitter that comprises a thermionic emission material selected from the group consisting of multi-metal hexaborides. In some embodiments, the multi-metal is Eu and a second metal selected from the group consisting of Rare Earth elements excluding Sc, Y, Pm, and Yb. The invention also provides a spacecraft including the system of the invention.

## Description

### BACKGROUND

A propulsion system with a high specific impulse is needed for spacecraft operation in Very Low Earth Orbit (VLEO). Electric propulsion, such as Hall thrusters, may be suitable. In general, Hall thrusters generate thrust by ionizing a propellant gas and creating an electric field that accelerates ions through an open end of a channel to generate a reaction force that produces thrust.

Such thrusters may include a hollow cathode that relies on a low-work function thermionic emitter material as a source of free electrons for sustainment of a plasma discharge. However, when operated in the presence of oxygen, thermionic emitter materials readily oxidize. The oxidation significantly increases the work function and reduces electron emission efficiency to the point that the device is unable to operate.

### SUMMARY

A system according to an example of the present disclosure includes an electric thruster configured to generate thrust. The electric thruster includes an electron emitter that comprises a thermionic emission material selected from the group consisting of multi-metal hexaborides. The multi-metal is Eu and a second metal selected from the group consisting of Rare Earth elements excluding Sc, Y, Pm, and Yb. Thus, in an aspect, the multi-metal may be a combination of a first metal which is Eu and a second metal selected from the group consisting of Rare Earth elements excluding Sc, Y, Pm, and Yb, and combinations of said Rare Earth elements (i.e. wherein the second metal is selected from (1) Rare Earth elements excluding Sc, Y, Pm, and Yb or (2) combinations of Rare Earth elements excluding Sc, Y, Pm, and Yb). The second metal is different from the first metal, i.e. the second metal is selected from the group consisting of selected from the group consisting of Rare Earth elements excluding Sc, Y, Pm, Yb and Eu, and combinations of said Rare Earth elements.

In a further example of any of the preceding or succeeding embodiments, the thermionic emission material has a Pilling Bedworth Ratio of greater than 2 and up to 5.

In a further example of any of the preceding or succeeding embodiments, the second metal is selected from the group consisting of Ce, La, Nd, and combinations thereof.

In a further example of any of the preceding or succeeding embodiments, the multi-metal includes, by atomic percentage of all of the multi-metals, at least 50% of Eu, such as at least 75% of Eu or at least 85% of Eu.

In a further example of any of the preceding or succeeding embodiments, the multi-metal includes a remainder of Ce, Nd, La, or mixtures thereof.

In a further example of any of the preceding or succeeding embodiments, the multi-metals include, by atomic percentage of all of the multi-metals, 7% to 10% of La.

In a further example of any of the preceding or succeeding embodiments, the multi-metals include, by atomic percentage of all of the multi-metals, 1% to 8% of Ce, 1% to 8% of Nd, or 1% to 8% of Ce and Nd combined.

In a further example of any of the preceding or succeeding embodiments, the multi-metals consist of Eu and one or more of Ce, Nd, or La.

In a further example of any of the preceding or succeeding embodiments, the multi-metals include, by atomic percentage of all of the multi-metals, 7% to 10% of La.

In a further example of any of the preceding or succeeding embodiments, the multi-metals include, by atomic percentage of all of the multi-metals, 1% to 8% of Ce, 1% to 8% of Nd, or 1% to 8% of Ce and Nd combined

A further example of any of the preceding or succeeding embodiments includes a hollow cylindrical cathode tube, and the electron emitter is disposed in the hollow cylindrical cathode tube.

In a further example of any of the preceding or succeeding embodiments, the electron emitter is cylindrical.

A further example of any of the preceding or succeeding embodiments includes an oxygen-containing propellant gas source fluidly connected with the hollow cylindrical cathode tube.

In a further example of any of the preceding or succeeding embodiments, the electron emitter is fluidly connected with an oxygen-containing propellant gas source.

In any of the preceding embodiments or succeeding embodiments the oxygen-containing propellant gas source may be oxygen or a mixture of oxygen with nitrogen and/or one or more other gases.

In a further example, the system of any of the preceding or succeeding embodiments is included in a spacecraft.

A system according to an example of the present disclosure includes an electric thruster that is configured to generate thrust. The electric thruster includes an electron emitter that comprises a thermionic emission material selected from the group consisting of multi-metal hexaborides.

In a further example of any of the preceding or succeeding embodiments, the multi-metal includes Eu.

In a further example of any of the preceding or succeeding embodiments, the multi-metal includes a second metal selected from the group consisting of Rare Earth elements excluding Sc, Y, Pm, and Yb. A further aspect is directed to the thruster of Embodiments 1P-8P below. In Embodiments 1P-9P, the electric thruster, or specifically the electron emitter and/or the thermionic emission material may be as defined in any preceding embodiment. The features described in the detailed description below may also apply equally to Embodiments 1P-9P.
1P. An electric thruster comprising:
   an electron emitter comprising a thermionic emission material made of a metal hexaboride composition.
2P. The electric thruster as recited in Embodiment 1P, wherein the metal is selected from the group consisting of rare Earth elements, Alkaline Earth elements, and transition metal elements.
3P. The electric thruster as recited in Embodiment 1P, wherein the metal is selected from the group consisting of Rare Earth elements and combinations thereof.
4P. The electric thruster as recited in Embodiment 3P, wherein the metal is selected from the group consisting of europium, cerium, lanthanum, and combinations thereof.
5P. The electric thruster as recited in Embodiment 1P, wherein the metal is selected from the group consisting of Alkaline Earth elements and combinations thereof.
6P. The electric thruster as recited in Embodiment 1P, wherein the metal is selected from the group consisting of transition metal elements and combinations thereof.
7P. The electric thruster as recited in any of Embodiments 1P-6P, further comprising a hollow cylindrical cathode tube, and the electron emitter is disposed in the hollow cylindrical cathode tube.
8P. The electric thruster as recited in any of Embodiments 1P-7P, wherein the electron emitter is cylindrical.
9P. A spacecraft including the electric thruster of any of Embodiments 1P-8P.

The present disclosure may include any one or more of the individual features disclosed above and/or below alone or in any combination thereof.

### BRIEF DESCRIPTION OF THE DRAWING

The various features and advantages of the present disclosure will become apparent to those skilled in the art from the following detailed description. The drawing that accompanies the detailed description can be briefly described as follows.

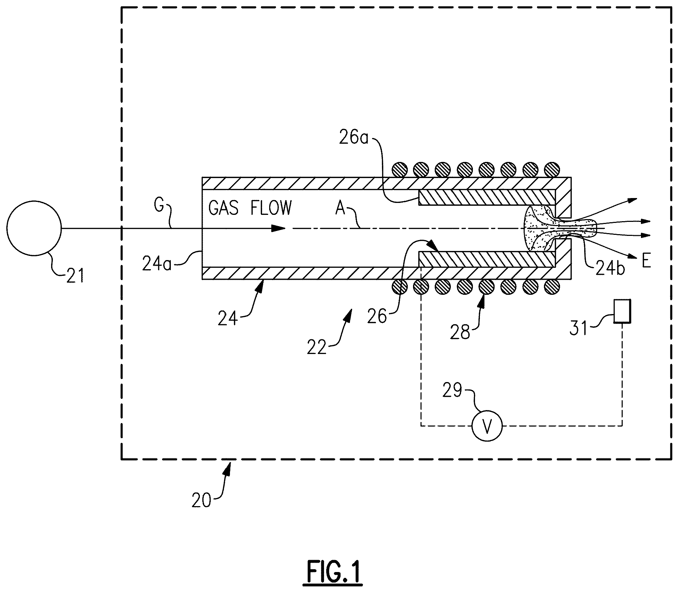

Figure 1 illustrates an electric thruster that has a thermionic emitter formed of a metal hexaboride alloy (MB₆).

### DETAILED DESCRIPTION

Figure 1 schematically illustrates an example of an electric thruster 20, such as a Hall thruster. In general, an electric thruster is a type of ion thruster in which a propellant gas (e.g., xenon, krypton, nitrogen, oxygen, etc.) is ionized and accelerated in an electric field to produce thrust. In the illustrated example, the thruster 20 is connected to an oxygen-containing propellant gas source 21, such as pure oxygen or a mixture of oxygen with nitrogen and/or one or more other gases.

The thruster 20 includes a cylindrical hollow cathode thermionic emitter 22. The thermionic emitter 22 is chosen in the electric propulsion because it produces free electrons at moderate operating temperatures and this production of electrons is enabled by a material with a low work function.

The hollow cathode thermionic emitter 22 includes a hollow cathode tube 24. The tube 24 has an inlet end 24a through which propellant gas G is provided and an orifice 24b at the opposed end, through which the gas exits. The interior of the tube 24 near the end with the orifice 24b is lined with a cylindrical thermionic insert 26 that is made of a bulk thermionic material 26a. The term "bulk" means that the thermionic material 26a is the primary, self-supporting foundational material that provides the structure of the insert 26, as opposed to a conformal layer or coating of material.

A heater 28, e.g., a coil, is disposed around the outside of the tube 24 at the axial location of the insert 26. The heater 28 heats the insert 26 to its thermionic emission temperature, and a power source 29 applies a voltage to generate an electric field E between the insert 26 and a downstream electrode 31 to accelerate the free electrons released by the insert 26 to ionizing potential, thus generating and sustaining a plasma from the propellant gas G.

Oxygen and oxygen-containing molecules (e.g., from water or carbon di/monoxide) can cause oxidation of a thermionic material. Substantial oxidation of the thermionic material may cause electron emission to become so inefficient that the material is inoperable as a thermionic emitter.

In this regard, the thermionic material 26a has a composition that enhances durability via a non-protective oxide layer. A non-protective oxide layer is counter-intuitive to the function that oxide layers normally serve in aerospace components, where dense passivating surface oxides are often desirable to block ingress of oxygen to an underlying metal or alloy. In the case of a thermionic emitter, however, such a dense surface oxide inhibits electron emission and is thus undesirable. Rather, if oxide forms, it is preferable for the oxide to readily spall and flake off from the surface so that electron emission is not inhibited. Accordingly, the term "non-protective" refers to the disclosed oxide layer being engineered to avoid formation of a dense, passivating surface layer. Rather, insofar as oxide forms, the oxide is designed, via controlled composition of the thermionic material 26a, to spall under the anticipated operating conditions (typically approximately 1500°C and an oxygen partial pressure of 10⁻² torr to 10⁻⁶ torr) such that the surface of the thermionic material 26a remains operable for thermionic emission.

The composition of the thermionic material 26a is a multi-metal hexaboride alloy (M¹M²B₆), where M¹ and M² represent the metals. The thermionic material 26a has a Pilling Bedworth Ratio (PBR) that is greater than 2. In general, the PBR is a ratio of the volume of metal oxide to the volume of metal consumed during corrosion. It is also indicative of the stress in the oxide. The thermionic material 26a also will have a work function approaching 2.1eV in order to perform comparably with LaB₆ as a baseline. Furthermore, compositions that have less negative free energy of oxide formation are favorable for inhibition of oxide formation. As an example, a selected composition may be an optimization between low work function, PBR of 2 or greater, and less negative free energy of oxide formation. Modeling suggests that a PBR that is 2 or greater results in a non-protective surface oxide that readily flakes off under the anticipated operating conditions of the thruster 20, thereby avoiding formation of a dense, adherent oxide that inhibits electron emission. In a further example, the PBR is in a range of 2 to 5. The oxides formed are expected to be of formulation MO, M₂O₃, or mixtures thereof.

The Pilling Bedworth Ratio (PBR / R_{PB}) may be calculated using the following equation ${R}_{PB} = \frac{{V}_{oxide}}{n ⋅ {V}_{metal}} = \frac{{M}_{oxide} ⋅ {ρ}_{metal}}{n ⋅ {M}_{metal} ⋅ {ρ}_{oxide}}$ wherein V is the molar volume, n is the number of atoms of metal per molecule of the oxide, M is the atomic or molecular mass, and ρ is the density.

Metals of the multi-metal hexaboride alloy are Eu and a second metal selected from the group consisting of Rare Earth elements (excluding Sc, Y, Pm, and Yb). Given this disclosure, one of ordinary skill in the art will be able to select a combination of metals with the prescribed PBR. Rare Earth elements for the second metal include La, Ce, Pr, Nd, Sm, Gd, Tb, Dy, Ho, Er, Tm, Lu, and combinations of these elements. In further examples, the second metal is selected from La, Ce, Nd, and combinations thereof, which are expected to form especially unstable oxides that readily spall to maintain low work function. Europium in the composition is expected to form a homogenous oxide that is predominantly EuO rather than Eu₂O₃.

In additional examples, the composition of the thermionic material 26a is M¹ₓM²₁₋ₓB₆, where M¹ is Eu and x is 0 < x < 1. For instance, the second metal of the composition includes one or more Rare Earth elements of Ce, La, or Nd. In one example, the second metals consists only of one or more of Ce, La, or Nd. In additional examples, the composition includes, by atomic percentage of all the multi-metals, at least 50% Eu, such as 75% or 85%, and a remainder of the second metal or metals selected from the examples above. For instance, the second metal includes 7% to 10% of La, 1% to 8% of Ce, 1% to 8% of Nd, or 1% to 8% of Ce and Nd combined.

Further composition examples are summarized in the table below.

**Table 1: Thermionic Material Compositions**

| **Composition (at.%)** | | | |
|---|---|---|---|
| Eu | La | Ce | Nd |
| ≥50 | ≥7 | 0 | 0 |
| ≥50 | ≥7 | >0 | 0 |
| ≥50 | ≥7 | 0 | >0 |
| ≥50 | 0 | 1-8 | 0 |
| ≥50 | 0 | 0 | 1-8 |
| ≥50 | 0 | 1-8 (combined) | |
| ≥75 | ≥7 | 0 | 0 |
| ≥75 | ≥7 | >0 | 0 |
| ≥75 | ≥7 | 0 | >0 |
| ≥75 | 0 | 1-8 | 0 |
| ≥75 | 0 | 0 | 1-8 |
| ≥75 | 0 | 1-8 (combined) | |
| ≥85 | ≥7 | 0 | 0 |
| ≥85 | ≥7 | >0 | 0 |
| ≥85 | ≥7 | 0 | >0 |
| ≥85 | 0 | 1-8 | 0 |
| ≥85 | 0 | 0 | 1-8 |
| ≥85 | 0 | 1-8 (combined) | |

The technique of making the thermionic material 26a is not particularly limited and may include powder processing. For example, powders of the metal hexaborides or other starting powders determined to produce the desired composition are mixed together in accordance with the desired atomic percentages of the final composition and then pressed into a pellet or other desired shape, followed by sintering the pressed shape to consolidate the powders into final or near final form.

In another example, starting powders of oxides of each of the metals are mixed with a stoichiometric amount of a powdered source of boron, such as boron carbide powder. The mixture of the oxide powder and the boron powder is then heated under vacuum to a temperature at which the constituents react to substitute boron for oxygen and thereby convert the metal oxides to metal hexaborides. In one example, the temperature is approximately 1600°C to 1800°C. The hexaboride powders are then mixed in the desired ratio for the end composition, and that mixture is then compacted in a die to a desired shape. As an example, the powder is cold compacted at approximately 5000-7000 pounds per square inch. The compacted green body is then thermally consolidated. In one example, the thermal consolidation is conducted in a tube furnace under argon cover gas by heating the compacted body at 5°C/min to approximately 1800°C, holding for approximately 8 hours, and then cooling to ambient at 5°C/min. As will be appreciated, the disclosed pressures, temperatures, times, and heating/cooling rates are non-limiting and may be adjusted for optimization of the final consolidated product.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure.

## Claims

1. A system comprising:
an electric thruster configured to generate thrust, the electric thruster including an electron emitter comprising a thermionic emission material selected from the group consisting of multi-metal hexaborides.

2. The system as recited in claim 1, wherein the multi-metal includes Eu.

3. The system as recited in claim 1 or claim 2, wherein the multi-metal includes a second metal selected from the group consisting of Rare Earth elements excluding Sc, Y, Pm, and Yb.

4. The system of any preceding claim, wherein the multi-metal is Eu and a second metal selected from the group consisting of Rare Earth elements excluding Sc, Y, Pm, and Yb, and combinations of said Rare Earth elements.

5. The system as recited in any preceding claim, wherein the thermionic emission material has a Pilling Bedworth Ratio of greater than 2 and up to 5.

6. The system as recited in any preceding claim, wherein the second metal is selected from the group consisting of Ce, La, Nd, and combinations thereof.

7. The system as recited in any preceding claim, wherein the multi-metal includes, by atomic percentage of all of the multi-metals, at least 50% of Eu.

8. The system as recited in claim 7, wherein the multi-metal includes a remainder of Ce, Nd, La, or mixtures thereof.

9. The system as recited in any preceding claim, wherein the multi-metals include, by atomic percentage of all of the multi-metals, 7% to 10% of La.

10. The system as recited in any preceding claim, wherein the multi-metals include, by atomic percentage of all of the multi-metals, 1% to 8% of Ce, 1% to 8% of Nd, or 1% to 8% of Ce and Nd combined.

11. The system as recited in any preceding claim, wherein the multi-metals consist of Eu and one or more of Ce, Nd, or La.

12. The system as recited in any preceding claim, further comprising a hollow cylindrical cathode tube, and the electron emitter is disposed in the hollow cylindrical cathode tube.

13. The system as recited in claim 12, wherein the electron emitter is cylindrical.

14. The system as recited in claim 12 or claim 13, further comprising an oxygen-containing propellant gas source fluidly connected with the hollow cylindrical cathode tube.

15. A spacecraft including the system as recited in any preceding claim.
